# EUROPEAN PATENT APPLICATION

(11) **EP 1 542 436 A1**
(43) Date of publication of application: **15.06.2005**
(21) Application number: 03368109.9
(22) Date of filing: 08.12.2003
(51) Int. Cl.: H04M 1/22, H05B 37/02

(54) **Light show ASIC**

(71) Applicant: Dialog Semiconductor GmbH, 73230 Kirchheim/Teck-Nabern (DE)
(72) Inventor: Edwards, Malcolm, 85635 Hoehenkirchen (DE); Gray, Richard, Malmesbury Wilts, SN16 0AJ (GB); Schmitz, Richard, 73235 Weilheim (DE)
(74) Representative: Schuffenecker, Thierry

(57) **Abstract**

A system and a method for visual, electronic communication and/or entertainment purposes, displaying a lightshow, which can, if desired, represent selected information/events have been achieved. Said lightshow/information is displayed using one or more LED modules comprising more than one, usually three, LEDs emitting each light in different primary colors of a color space. Thus a lightshow/information/events can be visually displayed using a multitude of colors, different brightness, by flashing, by activation of specific positions, and by ON/OFF intervals. Said LED modules are controlled by a circuit comprising a LED driver unit, controlling the light intensity of each LED, a sequencer to control said LED drivers, and a memory to store the patterns for the illumination, the sequence and the brightness. The LEDs can be preferably addressed in a multiplexing mode, thus the connection between the LED drivers and the LEDs can be simplified. A user could compose his own light show, saving and replaying them or downloading light shows from the Internet or via a phone. After the defined sequence is downloaded the circuit runs autonomously. The present invention can be used for communication between persons, between persons and machines and for fun purposes.

## Description

### Technical field

This invention relates generally to a visual communication system, and more particularly to a system wherein either information can be displayed by lights which represent different information/events by having different colors, brightness, ON/OFF intervals, etc.

### Background art

Visual communication is just a part of the overall category that we call "communication". It is the category of communication that relies on vision. All communication involves signs and codes. Signs are artifacts or acts that refer to something other than them; that is, they are signifying constructs. Semiotics is the study of signs. Information visualization, the representation of information by visual means, can be considered to encompass any representation involving the use of perception. Semiotics is restricted to the visual modality.

One or more lights can be used to receive visual communication. Information or the correspondent meaning of the visual signs can be conveyed by the color, brightness, and ON/OFF intervals of said lights. Lighthouses are a well-known example for a visual communication. Lighthouses are providing visual signals coded in colors and intervals that can be decoded by the helmsman of a ship to identify the position and a safe route of his ship.

Another examples of the usage of lights in visual communication are in the area of messaging by phones. The following two patents describe the usage of lights for visual communication by phones:

U. S. Patent 6,330,314 (to Motooka et al.) describes, when a business message, sent from a caller's phone, is recorded in the recording/playback section, the main control section makes a judgment as to whether or not any phone number that coincides with the caller's phone number contained in caller's information received by the caller information receiving section has been recorded in a storage section. If the judgment shows that there is a coincided phone number, it provides a special display in which, for example, the a back light or LED of the display section is allowed to flicker, for example, at intervals of 4 Hz, or the illumination color of the back light or the LED is changed, or a message, such as "a business message from Mr. O ", is displayed. Thus, the answer phone makes it possible for the user to positively recognize whether or not a business message from a desired caller has been recorded promptly.

U. S. Patent 6,418,323 (to Bright et al.) discloses a wireless mobile phone, which is provided with a couple of buttons and complementary logic to facilitate entry and transmission of Morse code representations of alphanumeric data. As a result, a user may use the provided facilities to engage in non-verbal communication for sensitive subject matters in the middle of a call. In one embodiment, the complementary logic further facilitates echoing on a display, alphanumeric data corresponding to any entered Morse code representations. Additionally, each of the Morse code entry buttons includes one or more light emitting diodes (LEDs), and the LEDs are lit to visually echo the Morse code representations of any alphanumeric data entered through a standard input keypad.

Another patent is describing a visual communication in the area of air traffic control:

U. S. Patent 4,006,446 (to White) discloses a visual communication system using color-coded lights through which the RAPCON facility at an airport keeps the control tower informed as to the status of aircraft under its control. Three approach zones based on distance from the runway are defined by the colors white, amber, and green, green being closest to the runway. Keyboards are provided at the RAPCON and the control tower, each having three illuminated primary white, amber, and green keys and three illuminated secondary white, amber, and green keys, the primary keys representing the lead aircraft in their zones and the secondary keys representing a second aircraft, if any, in the zone. Upon entry of an aircraft into a zone, the RAPCON operator actuates a primary or secondary key for that zone, as appropriate, causing fiashing illumination of the key. The control tower acknowledges by momentarily depressing the flashing key, which steadies its illumination. The RAPCON operator can cancel the illumination of a key, either flashing or steady, by redepressing the key. Provision is made for automatic cancellation of primary key illumination when the primary or secondary key of the next zone nearer the runway is actuated, and for automatic transfer of secondary key illumination, either steady or flashing, to the primary key when the primary is cancelled. An additional key, coded red to indicate an emergency situation for the lead green zone aircraft, can be actuated either by the RAPCON or the control tower, but cancelled only by the control tower. Actuation of the red key automatically cancels primary green and prevents further actuation of primary green, or transfer of secondary green, until red is cancelled.

### Summary of the invention

A principal object of the present invention is to provide a method and a system to communicate visually a multitude of signals representing a multitude of different informations/events.

A further object of the present invention is to achieve a system to communicate visually a multitude of signals, which is inexpensive to be manufactured.

Another further object of the present invention is to achieve a system and a method to communicate visually a multitude of signals, which is easy to be handled.

In accordance with the objects of this invention a system for visual, electronic communication, highlighting information/events, wherein LED modules are displaying related light signals having defined properties representing said different information/events has been achieved. Said system comprises a circuit comprising an interface to input information, a memory to store the information about the properties of said signals to be displayed, a sequencer to control one or more LED drivers, a LED driver unit comprising a driver for each color of LED able to control the intensity of light where one driver for each LED is used, and an electrical connection to said LED modules. Furthermore said system comprises an arrangement of one or more LEDs modules.

In accordance with further objects of the invention a phone system highlighting information/events, wherein LED modules are displaying related signals representing said different information/events has been achieved. Said system comprises a circuit comprising an interface to input of information, a memory to store the information about the properties of said signals to be displayed, a sequencer to control one or more LED drivers, a LED driver unit comprising a driver for each color of LED able to control the intensity of light where one driver for each LED is used, and an electrical connection to said LED modules. Furthermore said system comprises an arrangement of one or more LED modules.

In accordance with further objects of the invention a method to establish visual, electronic communication, highlighting information/events, wherein LED modules are displaying related light signals having defined properties representing said different information/events has been achieved. Said method comprises providing a circuit comprising an interface, a memory, a sequencer, a LED driver unit connected to LEDs, and one or more LED modules, comprising more than one LED each. The steps of said method comprise to determine the information to be visually highlighted, to define the kind of highlighting of the information selected above, to compose the sequencer steps according to the definitions of the two steps above, if said composing software is built into the phone to store the sequences in said memory, otherwise to download said sequences and to store them in said memory, and finally the system is ready for operation.

### Description of the drawings

in the accompanying drawings forming a material part of this description, there is shown:
Fig. 1 illustrates a phone as a preferred embodiment of the present invention having LED modules to signal informations/events
Fig. 2 shows a schematic diagram of a preferred embodiment of the invention.
Fig. 3 shows a more detailed block diagram of the system invented.
Fig. 4 shows a schematic diagram of the "light-show
Fig. 5 shows a flowchart of the method invented.

### Description of the preferred embodiments

A system and a related method to provide visual information is disclosed, comprising a "light show" ASIC controlling one or more modules of LEDs. It should be understood that said visual information is meant in a very broad sense; it could refer to a semiotics usage providing "solid" information as well as fun/entertainment usage providing a rich, colorful light show. The invention comprises a LED driver, controlling the intensity of light, wherein a number of LEDs can be combined to show all possible visible colors, and a preferable free programmable sequencer able to temporally control the color and the intensity of each LED individually for communication or entertainment.

In a preferred embodiment of the present invention each module of LEDs comprises three RGB LEDs, being able to provide a light beam in any color. In case LEDs are available in other primary colors as e.g. cyan, magenta and yellow other color spaces, as e.g. CMY, could be used as well. Embodiments using more than three LEDs are possible as well. Said preferred embodiment is used in a phone system providing information about incoming calls. Said information can be displayed by different colors of said LED modules, by ON/OFF intervals, by flashing intervals of said LED modules using different colors, by addressing specific positions of said LED modules and by individual brightness of said LED modules. For instance calls from important callers can be announced by a flashing red lights wherein the position of said red light can be assigned to different parties calling.

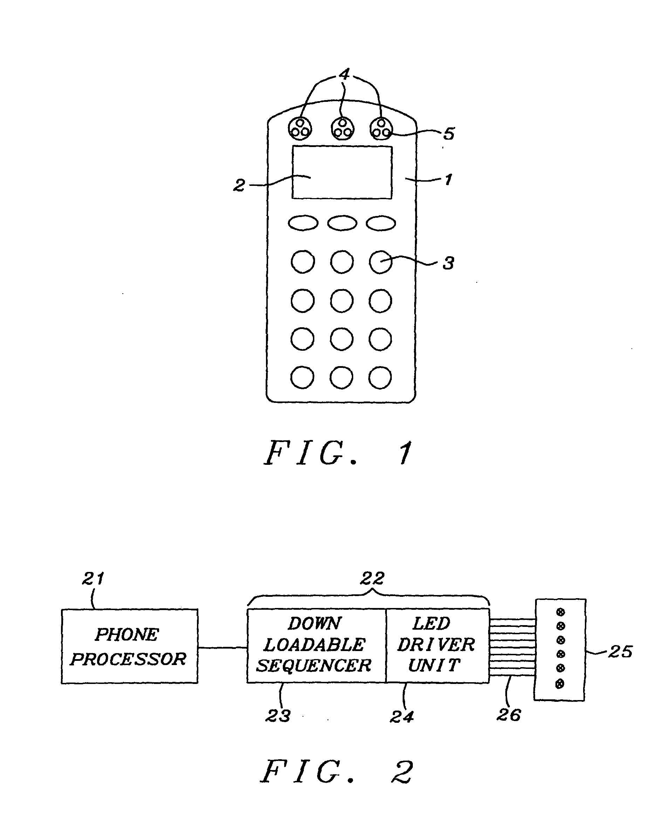

Fig. 1 shows a front side of a mobile phone 1 comprising a display 2, a keyboard **3,** and an array of LED modules **4** used for visual communication. Each LED module **4** comprises three RGB LEDs **5.** In a preferred embodiment said array of LED modules **4** is arranged on top of the display **2.** It should be understood that said array of LED modules could be located on any other location of the front side of a mobile phone, on any location of the sides or on any location of the backside. If the light show application is purely for fun usage the light could be mounted e.g. in a very prominent position and include with a very sophisticated plastic lens and diffuser system. For semiotics usage the lights could be mounted around the keypad. For clamshell phones the lights could even be put around the keyboard area using a transparent shell. Above described possible locations are non-limiting examples.

The position of a LED module sending out a signal can indicate a certain category of information. As example, a first of three LED modules could indicate who is calling, a second LED module could indicate a priority of calls and a third LED module could indicate internal information, as e.g. a reminder function. It should be understood that this kind of information categories are examples only. In other applications, as e.g. games, very different categories could be assigned to the various positions of LED modules

Fig. 2 shows a schematic diagram of a preferred embodiment of the system of the present invention. Said system comprises a phone processor **21**, which is connected to a "light show" ASIC 22, being the key component of the present invention. Said "light show" ASIC **22** comprises a downloadable, free programmable sequencer **23,** an LED driver unit **24,** being connected to six modules of LEDs **25** via nine pins **26** and a multiplexer arrangement. In a preferred embodiment of the invention said free programmable sequencer **23** is implemented on an ASIC. It should be understood that the circuitry of said "light show" ASIC **22** could be implemented as an IC or even as a traditional discrete circuit. Each of said six LED modules **25** comprises three RGB LEDs, adding up to a total of 18 LEDs. Using a multiplexer arrangement, which will be shown later, the number of pins 26 can be reduced from 18 for each LED to nine.

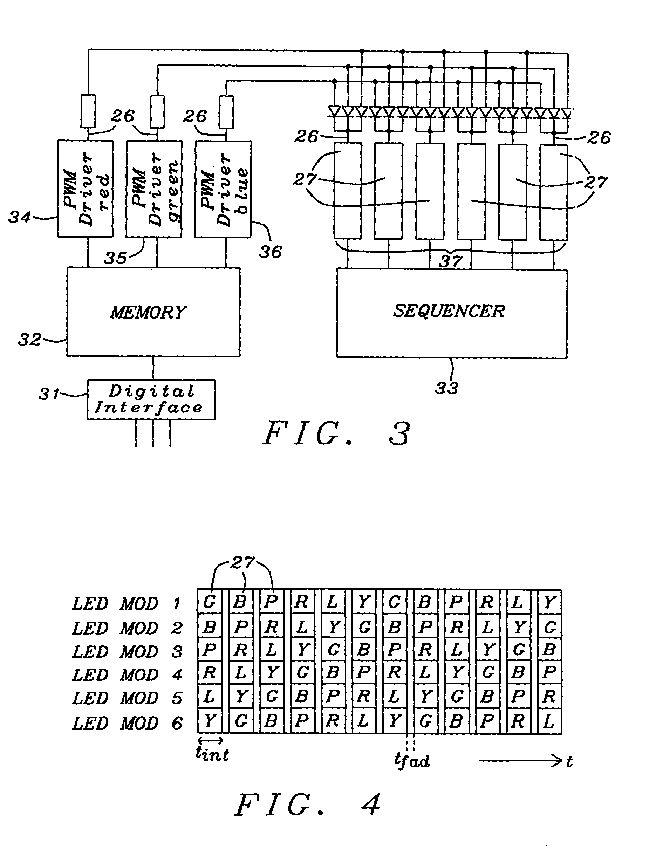

Fig. **3** describes in more detail the components of the "light show" ASIC processor **22.** Said processor comprises a digital interface **31,** providing the connection to the phone processor **21** shown in Fig. 2, a memory **32** to store the intensity setting, the color pattern, and sequence pattern used, the sequencer **33** receiving the control input from said memory **32**, a pulse width modulation (PWM) driver for the color red **34,** a PWM driver for the color green **35**, and a PWM driver for the color blue **36,** and drivers **37** for each of said six LED modules **27.** Said LED module drivers **37** are controlled by the sequencer **33,** they are controlling together with the three PWM drivers **34-36** the 18 individual LEDs of said six LED modules 27. Said PWM drivers 34-36 are dedicated to either red, green or blue LEDs. Each of the six LED modules **27** comprises a red, a green and a blue LED. These 18 LEDs are arranged in a multiplexing arrangement. A specific LED emits light if it is activated by the related PWM driver, controlling its specific color, and by the related driver controlling the LED module the specific LED belongs to. Using the multiplexing arrangement shown the number of output pins **26** could be reduced to nine pins. Otherwise 18 output pins would have been required for the 18 LEDs.

The four-bit PWM control of the three PWM drivers **34-36** provides 4096 different color options per RGB channel. Said three PWM drivers **34-36** and said six LED module drivers **27** are current controlled, thus ensuring a constant light output.
It should be understood that pulse width modulation (PWM) is not the only possibility to drive the LED modules. There are a variety of other modulation methods available to drive the LEDs. The digital interface **31** could be substituted by an analog interface as well.

Fig. **4** illustrates, as example, how the colors of lights of a preferred embodiment of the present invention can change. It shows the colors of the LED modules **1-6** how they change over time after set time intervals tint. The sequencer of the ASIC described could be set to a time interval tint of e.g. 0.5 sec. The rectangles 27 represent the lights of the LED modules. The letters
**G** represents a green light,
**B** represents a blue light,
**P** represents a pink light,
**R** represents a red light,
**L** represents a lilac light, and
**Y** represents a yellow light.

If desired, a fading time interval t_{fad} can be defined to define a smooth transition from one color to the next color displayed of a LED module **27.** There are different options how to define said fading interval t_{fad}. These options could either be "No Fade", "Slow Fade", "Linear Fade", or "Fast Fade".

Each sequence step represents one color value. The prime parameter for this color value is duration. When the duration has expired the sequencer moves onto the next color value. At the transition sequence point the various fade functions are independently applied to the brightness of both the sequence that is being turned off and the new one that is being turned on. An additional parameter that may be very effective is a "flash" function that would only be applied at turn on point of time. This would always turn the LED on initially to its maximum brightness and then quickly go down the set brightness.

It should be understood that the colors shown in Fig. **4** are only a very small part of the multitude of different colors that can be shown actually. In a preferred embodiment of the present invention, as described above, 4096 different colors can be shown.

It should be understood also that the "light show" ASIC of the present invention runs autonomously the defined sequence after said sequence has been downloaded.

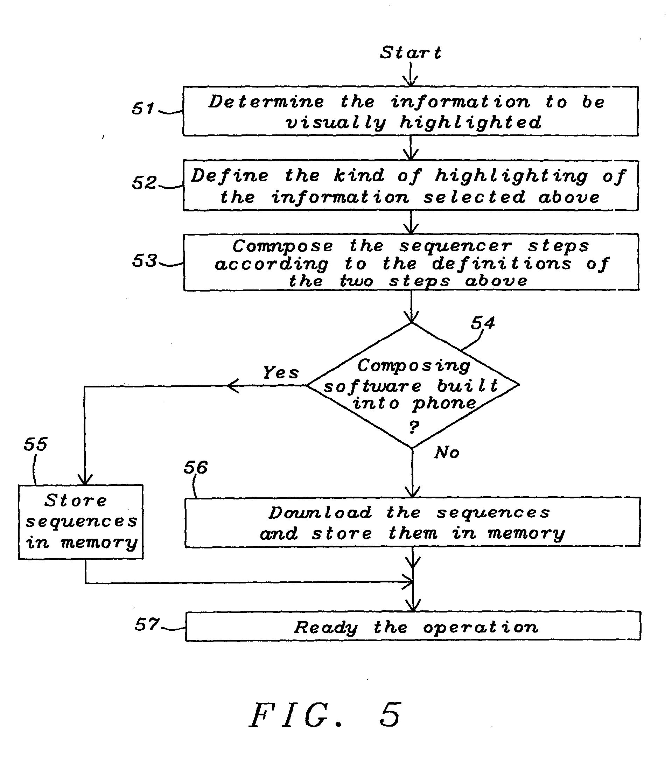

Fig. **5** describes a method how to provide visual communication by highlighting LEDs in the case of defined information or events. In the first step **51** the information/event has to be determined upon which the highlighting should occur. Many phones already today incorporate time management functions e.g. reminder functions. Said functions could be easily extended to operate the light show when desired. Another example is incoming call identification. Programs for incoming call identification exist in phone processors today. It is merely an extension said program required which would load the sequencer with the correct light show and issue a start command. If the application was just a fun it would be simply be pressing a particular phone key (or keys) to start.

In the case, as a non-limiting example, caller identification, as described above is selected, visual highlighting occurs if an important person calls. Another example could be a reminder function. In the second step **52** the kind of highlighting of the information determined in the previous step **51** is defined. The different kinds of highlighting include the selection of colors, ON/OFF intervals of specific LEDs, if desired, the selection of the position of the LED modules to be activated, selection of the brightness of the LEDs activated, and flashing intervals of the LEDs activated, using different colors, if desired. Using the example of the caller identification described above, a flashing light in red color could be used to communicate an incoming call of an important person. Different positions of lights, different flashing intervals in red color could be assigned to different important callers. In the following step **53** the sequencer steps required are composed according to the definitions of the previous steps **51** and **52**. The composer software required could be built into a phone similar to the software installed for melody composing available on many phones today. The phone would probably be supplied with a few predefined examples and the user could edit these and store them as new files for future usage. Another method could to provide composer software for a PC allowing sequences to be composed on a PC and then downloading them into the phone. There is a multitude of possible functions e.g. time management functions possible which could be applied.

Step **54** describes the question if said composer software is built into the phone. In case said software is built into the phone the composed sequences are stored in the memory in step **55.** In case the sequences are composed using a PC or available in the Internet said sequences are downloaded and stored in the memory of said light show circuit in step **56.** Step **57** signifies the readiness of the "light show" circuit of the present invention for operation.

It should be understood also that the "light show" circuit of the present invention could be used in a multitude of very different applications. A few examples are electronic watches, toys, cameras, PCs, automobiles, robotics, intuitive systems, event identification, multifunction alarm, synchronized music, light guided operations, graphic equalizer, radios, display backlighting, etc.

An important aspect of the present invention is that a user is able to compose his own light shows, saving and replaying them or downloading prepaid light shows from the Internet or via a phone.

As described above companies could sell sequences that could either be downloaded directly via the cellular network or via Internet and downloading them from the PC. Said sequences could be used for communication or fun purposes.

All of the above-described methods are standard practice in phones today that incorporate polyphonic melody generators. The only difference being in the present invention that lights are driven with the stored sequences while melody generators drive speakers or headphones.
Any number of LED modules, starting from one LED moduie, couid be used. The LED used could be selected using any color space, not limited to the RGB color space as used in a preferred embodiment described above.

While the invention has been particularly shown and described with reference to the preferred embodiments thereof, it will be understood by those skilled in the art that various changes in form and details may be made without departing from the spirit and scope of the invention.

## Claims

1. A system to perform a light show, wherein LED modules are displaying related light beams having defined properties, wherein said properties have been defined prior to performing said light show, is comprising:
- a circuit comprising:
- an interface to input information;
- a memory to store the information about the properties of said beams to be displayed;
- a sequencer to control one or more LED drivers;
- a LED driver unit comprising a driver for each color of said LED modules able to control the intensity of light where one driver for each LED is used; and
- an electrical connection to said LED modules; and
- an arrangement of one or more LEDs modules.

2. The system of claim 1 wherein said properties of said light beams comprise different defined brightness for each LED.

3. The system of claim 1 wherein said properties of said light beams comprise different defined flashing intervals for each LED.

4. The system of claim 1 wherein said properties of said light beams comprise different ON/OFF intervals, different colors, different brightness, and a flashing interval for each LED.

5. The system of claim 1 wherein said properties of said light beams comprise a light pattern over a multitude of LED modules.

6. The system of claim 1 wherein said properties of said light beams comprise a light intensity setting.

7. The system of claim 6 wherein said light intensity setting is defined for each LED individually.

8. The system of claim 1 wherein said properties of said light beams comprise a defined sequencing of said LEDs.

9. A system for visual, electronic communication, highlighting information/events, wherein LED modules are displaying related light signals having defined properties representing said different information/events, is comprising:
- a circuit comprising:
- an interface to input information;
- a memory to store the information about the properties of said signals to be displayed;
- a sequencer to control one or more LED drivers;
- a LED driver unit comprising a driver for each color of LED able to control the intensity of light where one driver for each LED is used; and
- an electrical connection to said LED modules; and
- an arrangement of one or more LEDs modules.

10. The system of claim 1 or 9 wherein the parameters defining said properties of said light signals are downloaded via said interface to input information and stored in said memory.

11. A phone system highlighting information/events, wherein LED modules are displaying related signals representing said different information/events, is comprising:
- a circuit comprising:
- an interface to input of information;
- a memory to store the information about the properties of said signals to be displayed;
- a sequencer to control one or more LED drivers;
- a LED driver unit comprising a driver for each color of LED able to control the intensity of light where one driver for each LED is used; and
- an electrical connection to said LED modules; and
- an arrangement of one or more LED modules.

12. The system of claim 11 wherein said LED modules are located on a prominent location of said phone system.

13. The system of claim 1 wherein said LED modules are located on the front side of said phone system.

14. The system of claim 11 wherein said LED modules are located on the sides of said phone system.

15. The system of claim 11 wherein said phone system is a mobile phone.

16. The system of claim 15 wherein said LED modules are located on the backside of said mobile phone.

17. The system of claim 11 wherein said phone comprises composer software to define the parameters of said sequencer and to download said parameters to said memory.

18. The system of claim 11 wherein the parameters of said sequencer are downloaded from a PC or from the Internet.

19. The system of anyone of claims 1, 9 or 11 wherein said arrangement of one or more LED modules comprises three LED modules.

20. The system of anyone of claims 1, 9 or 11 wherein said arrangement of one or more LED modules comprises more than one LED each.

21. The system of claim 20 wherein said arrangement of one or more LED modules comprises three LEDs each.

22. The system of claim 21 wherein said three LEDS emit each a light of a different color wherein said colors are primary colors of a color space.

23. The system of claim 22 wherein said three LEDS emit red, green and blue light (RGB).

24. The system of anyone of claims 1, 9 or 11 wherein said LED drivers are PWM LED drivers.

25. The system of claim 24 wherein said PWM drivers are 4-bit drivers.

26. The system of claim 25 wherein 4096 different colors can be displayed.

27. The system of anyone of claims 1, 9 or 11 wherein said LED drivers are current controlled drivers

28. The system of claim 9 or 11 wherein said related signals representing said different information/events are displayed using lights having different brightness.

29. The system of claim 9 or 11 wherein said related signals representing said different information/events are displayed using flashing lights.

30. The system of claim 9 or 11 wherein defined categories of information are assigned to specific locations of LED modules.

31. The system of claim 9 or 11 wherein said related signals representing said different information/events are displayed using lights having a related ON/OFF interval.

32. The system of claim 9 or 11 wherein said related signals representing said different information/events are displayed using lights having a related ON/OFF interval, different colors, different brightness, a flashing interval, an assignment to specific positions, and a related ON/OFF interval.

33. The system of anyone of claims 1, 9 or 11 wherein said LED driver unit is activating the lights in defined time intervals.

34. The system of anyone of claims 1, 9 or 11 wherein said LED driver unit is controlling the transition between different colors of a LED module using a "flash" mode at turn on point of time wherein said LED is turned on initially to its maximum brightness followed quickly by the set brightness.

35. The system of anyone of claims 1, 9 or 11 wherein said LED driver unit is controlling the transition between different colors of a LED module using a fading interval.

36. The system of claim 35 wherein different options are possible to define said fading interval.

37. The system of claim 36 wherein said options to define a fading interval include the options "No Fade", "Slow Fade", "Linear Fade", "Fast Fade".

38. The system of claim 37 wherein only a few of said options are being used.

39. The system of anyone of claims 1, 9 or 11 wherein said circuit is realized in an IC or in an ASIC.

40. The system of anyone of claims 1, 9 or 11 wherein said LEDs are connected to said circuit via output pins.

41. The system of claim 40 wherein said output pins are arranged and controlled by a multiplexer arrangement.

42. The system of claim 41 wherein nine output pins are arranged and controlled by a multiplexer arrangement.

43. The system of claim 9 or 11 wherein said properties of said light signals to be displayed comprise a light pattern over a multitude of LED modules.

44. The system of claim 9 or 11 wherein said properties of said signals to be displayed comprise a light intensity setting.

45. The system of claim 44 wherein said properties of said signals to be displayed comprise a light intensity setting for each LED individually.

46. The system of claim 9 or 11 wherein said properties of said signals to be displayed comprise a defined sequencing of said LEDs.

47. A method to establish visual, electronic communication, highlighting information/events, wherein LED modules are displaying related light signals having defined properties representing said different information/events comprising:
- providing a circuit comprising an interface, a memory, a sequencer, a LED driver unit connected to LEDs, and one or more LED modules, comprising more than one LED each;
- determine the information to be visually highlighted;
- define the kind of highlighting of the information selected above;
- compose the sequencer steps according to the definitions of the two steps above;
- if said composing software is built into the phone store the sequences in said memory;
- otherwise download sequences and store them in said memory;; and
ready for operation.

48. The method of claim 47 wherein said related signals representing said different information/events are displayed using lights having different colors.

49. The method of claim 48 wherein 4096 different colors are used.

50. The method of claim 47 wherein said related signals representing said different information/events are displayed using lights having different brightness.

51. The method of claim 47 wherein said related signals representing said different information/events are displayed using flashing lights.

52. The method of claim 47 wherein said rotated signals representing said different information/events are displayed using LED modules assigned to specific positions.

53. The method of claim 47 wherein said related signals representing said different information/events are displayed using lights having a related ON/OFF interval.

54. The method of claim 47 wherein said related signals representing said different information/events are displayed using lights having a related ON/OFF interval, different colors, different brightness, a flashing interval, an assignment to specific positions, and a related ON/OFF interval.

55. The method of claim 54 wherein said LED driver unit is controlling the transition between different colors of a LED module using a "flash" mode at turn on point of time wherein said LED is turned on initially to its maximum brightness followed quickly by the set brightness.
